# FASCICULE DE BREVET EUROPEEN

(11) **EP 2 547 583 B1**
(45) Date de publication et mention de la délivrance du brevet: **26.02.2014**
(21) Numéro de dépôt: 11714361.0
(22) Date de dépôt: 16.03.2011
(51) Int. Cl.: B64C 25/40

(54) **PROCÉDÉ ET DISPOSITIF D'ENTRAÎNEMENT D'AU MOINS UNE ROUE DE TRAIN D'ATTERRISSAGE D'UN AÉRONEF PAR UN MOTEUR DE ROUE**
VERFAHREN UND VORRICHTUNG ZUM ANTREIBEN MINDESTENS EINES FLUGZEUGFAHRWERKRADES MITTELS EINES RADMOTORS
METHOD AND DEVICE FOR DRIVING AT LEAST ONE LANDING GEAR WHEEL OF AN AIRCRAFT BY MEANS OF A WHEEL MOTOR

(30) Priorité: 17.03.2010 FR 1051895
(43) Date de publication de la demande: 23.01.2013
(73) Titulaire: Airbus Operations (S.A.S.), 31060 Toulouse (FR)
(72) Inventeur: BULIN, Guillaume, 31700 Blagnac (FR); CROS, Christophe, 31240 L'union (FR)
(74) Mandataire: Gicquel, Olivier Yves Gérard
(86) Numéro de dépôt international: PCT/FR2011/050531
(87) Numéro de publication internationale: WO 2011/114055

(56) Documents cités:
- EP-A2- 1 980 732
- WO-A1-2008/108933
- FR-A1- 2 930 759

## Description

L'invention relève du domaine des dispositifs de motorisation d'aéronef. Elle concerne plus particulièrement les moyens de déplacer un aéronef lors de ses évolutions au sol ("taxiing" en langue anglaise), notamment lors du roulage entre une piste et un point de stationnement au voisinage d'une aérogare.

### Contexte de l'invention et problème posé

Lors de leurs déplacements au sol, de façon usuelle, soit les aéronefs utilisent leurs moteurs principaux, soit ils sont tractés par des véhicules adaptés qui leur transmettent une poussée au niveau des roues. C'est particulièrement le cas d'aéronefs commerciaux, par exemple des appareils à turboréacteurs.

On comprend que l'utilisation des moteurs principaux se traduit, pour les exploitants de ces aéronefs, en une consommation de carburant et une pollution associée significatives.

Le recours à un véhicule tracteur spécialisé, quant-à-lui, limite naturellement considérablement l'autonomie de déplacement de l'aéronef au sol.

Il est déjà connu, notamment par les demandes de brevets FR 2 930 759 et FR 2 930 760, de disposer des moteurs au niveau de certains trains de roues, de manière à conférer à l'aéronef une autonomie de roulage au sol, dite "taxi autonome". Dans ces deux documents, une micro-turbine est installée au niveau d'un train de roues, et un dispositif d'entraînement des roues par ces turbines est prévu.

Cependant, ces dispositifs ont pour inconvénient une certaine complexité mécanique, ainsi que la nécessité d'amener du carburant ou de l'air pressurisé jusqu'à la micro-turbine, ce qui ajoute des canalisations, et est donc susceptible de se traduire en coût de fabrication ou en masse supplémentaire de l'aéronef.

Une autre disposition est proposée par la demande de brevet US 2006 / 0065779 A1 qui décrit un dispositif comportant un moteur électrique disposé au niveau du train avant d'un aéronef. Dans ce document, le moteur électrique est logé dans la jante d'une roue et la puissance électrique nécessaire est générée par le générateur auxiliaire de puissance (APU) de l'aéronef.

Du fait de la puissance nécessaire pour mouvoir l'aéronef au sol (quelques dizaines de kilowatts, soit environ un tiers à la moitié de la puissance normalement fournie par l'APU pour les autres systèmes utilisateurs de puissance au sol), l'APU doit alors être significativement surdimensionnée, ce qui se traduit par une augmentation de sa masse. Le gain de consommation en carburant peut alors éventuellement être contrebalancé par la masse supplémentaire.

Par ailleurs, le transport d'une puissance électrique de quelques dizaines de kilowatts vers le train de roues avant de l'aéronef nécessite l'installation d'une ligne de puissance dédiée, qui contribue également à compliquer la conception de l'appareil et à l'alourdir.

### Objectifs de l'invention

La présente invention a donc pour objet de remédier à l'un au moins des problèmes évoqués plus haut.

### Exposé de l'invention

A cet effet, l'invention vise un dispositif selon la revendication 1.

On comprend que l'invention vise un dispositif de motorisation pour taxi autonome, dans lequel la génération de puissance n'est plus localisée au niveau du train de roues, comme dans les dispositifs utilisant une micro-turbine, mais au niveau d'un moteur principal.

Par ailleurs, de cette manière, la micro-turbine est susceptible de servir au lancement mécanique du turboréacteur, ce qui constitue un avantage de son installation à proximité dudit turboréacteur.

Préférentiellement, le dispositif est destiné à être utilisé pour entraîner un train de roues disposé sous la voilure principale et la source de puissance est disposée au voisinage du turboréacteur le plus proche dudit train de roues.

Il est clair que cette disposition permet de réduire substantiellement la longueur de la ligne de puissance devant être installée entre le générateur électrique et le moteur électrique installé dans le train de roues.

Selon une mise en oeuvre particulière, la source de puissance comporte une micro-turbine entraînant un générateur.

Cette disposition permet éventuellement de remplacer un générateur de puissance auxiliaire (APU), ou de créer une redondance pour celui-ci.

Dans ce cas, la micro-turbine comporte avantageusement des moyens d'entraîner de façon débrayable le turboréacteur près duquel elle est disposée.

Selon un mode de réalisation préféré, la micro-turbine entraîne le générateur par l'intermédiaire d'une roue libre et d'un démultiplicateur de vitesse.

Dans un mode de réalisation particulier, pour un aéronef du type dont chaque turboréacteur est doté d'une boîte à accessoires, comportant une transmission mécanique reliée à la partie tournante du turboréacteur,

l'ensemble formé par la micro-turbine et le générateur électrique est reliée à la transmission de la boite à accessoires, de façon débrayable, par l'intermédiaire d'un embrayage mécanique commandé, de type à crabots.

Selon un premier mode de réalisation, le générateur est un générateur électrique, la ligne de transmission de puissance est une ligne de transport d'électricité, et le moteur de roue est un moteur électrique.

Cette disposition permet éventuellement de remplacer un générateur de puissance auxiliaire (APU), ou de créer une redondance pour celui-ci.

Alternativement, le générateur est un générateur pneumatique, la ligne de transmission de puissance est une ligne de transmission de pression pneumatique, et le moteur de roue est un moteur pneumatique.

Alternativement, le générateur est un générateur hydraulique, la ligne de transmission de puissance est une ligne de transmission par fluide sous pression, et le moteur de roue est un moteur hydraulique.

L'invention vise sous un autre aspect un ensemble formé d'un dispositif tel qu'exposé, et d'une nacelle d'aéronef comportant un turboréacteur, et tel que :
- la micro-turbine est installée dans la nacelle du turboréacteur,
- la micro-turbine est alimentée en carburant grâce à une connexion sur le circuit d'alimentation du turboréacteur, en aval d'une "shut-off valve" de ce turboréacteur,
- la micro-turbine est alimentée en air par l'intermédiaire d'une veine d'air reliée à la ventilation de la zone dite corps de la nacelle du turboréacteur,
- la micro-turbine est dotée d'une zone de sortie de gaz chauds, au niveau de la surface extérieure de la nacelle du turboréacteur.

Dans un mode de réalisation avantageux, la micro-turbine est installée en lieu et place usuellement réservée à un démarreur pneumatique de ce turboréacteur, par son tuyau d'alimentation et sa valve d'air.

Sous encore un autre aspect, l'invention vise un aéronef, comportant un ensemble tel qu'exposé ci-dessus, installé sur un seul turboréacteur.

L'invention vise également un procédé de pilotage d'un aéronef au sol, lors d'une phase de roulage entre une piste d'atterrissage et un point de stationnement, ledit aéronef comportant au moins un ensemble tel qu'exposé, comportant des phases suivantes :
- extinction des turboréacteurs principaux,
- mise en marche d'au moins une micro-turbine,
- mise en marche du ou des moteurs de roue alimentés par la micro-turbine,
- régulation de la micro-turbine en fonction de la puissance demandée par les moteurs de roue,
- arrêt et redémarrage de la micro-turbine selon les besoins d'arrêt et redémarrage de l'aéronef durant son roulage.

L'invention vise de même un procédé de pilotage d'un aéronef au sol, lors d'une phase de roulage entre un point de stationnement et une piste de décollage, ledit aéronef comportant au moins un ensemble tel qu'exposé, comportant des phases suivantes :
- mise en marche d'au moins une micro-turbine,
- mise en marche du ou des moteurs de roue alimenté par la micro-turbine,
- régulation de la micro-turbine en fonction de la puissance demandée par le moteur de roue
- arrêt et redémarrage de la micro-turbine selon les besoins d'arrêt et redémarrage de l'aéronef durant son roulage,
- démarrage du turboréacteur relié à la micro-turbine par embrayage des moyens débrayables de liaison avec la partie tournante du turboréacteur,
- arrêt de la micro-turbine.

L'invention vise également un aéronef comprenant au moins un dispositif ou un ensemble tel qu'exposé.

L'invention vise sous un aspect particulier un aéronef comprenant un dispositif dans lequel le générateur est un générateur électrique, et dans lequel le générateur fait office de générateur de puissance auxiliaire (APU) pour l'aéronef.

On comprend que dans ce cas, le générateur électrique est simplement relié aux systèmes de distribution électriques de l'aéronef, comme l'est usuellement un générateur de puissance auxiliaire.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- figure 1 : une vue schématique d'un avion sur lequel est mis en oeuvre un dispositif conforme à l'invention,
- figure 2 : une vue schématique d'un turboréacteur, de la disposition de la boite à accessoires et d'une micro-turbine de génération de puissance.

### Description détaillée d'un mode de réalisation de l'invention

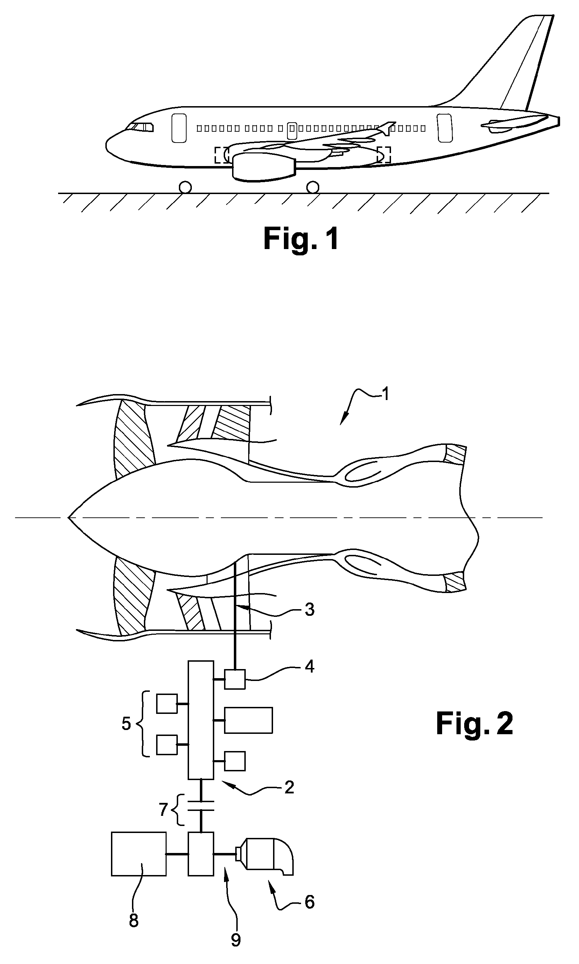

La figure 1 illustre, de façon schématique, la configuration générale d'un avion utilisant un dispositif selon l'invention. Dans le présent exemple nullement limitatif, l'avion considéré est un appareil de transport de passagers, de type biréacteur d'environ 150 places, les turboréacteurs étant disposés sous les ailes de la voilure principale.

Comme on le voit sur la figure 2, chaque turboréacteur 1 est supposé doté d'une boîte à accessoires 2 (dite "gearbox" en langue anglaise) de type classique. Cette boîte à accessoires 2 comporte un dispositif d'entrainement par engrenages et est reliée à la partie tournante du turboréacteur par une liaison mécanique de type arbre d'entraînement 3 et renvoi d'angle 4.

La boite à accessoires 2 sert à transmettre une partie de la puissance du turboréacteur 1 à divers accessoires moteurs 5, par exemple une pompe hydraulique, un générateur électrique fournissant le courant à bord de l'avion etc.

Dans le présent exemple de mise en oeuvre, une micro-turbine 6 est installée dans la nacelle de chaque turboréacteur 1, sensiblement à l'emplacement usuellement utilisé par un démarreur pneumatique ("air starter" en langue anglaise) de ce turboréacteur 1, par son tuyau d'alimentation et sa valve d'air.

Cette micro-turbine 6 présente, dans le présent exemple nullement limitatif, des dimensions approximatives de 65 cm de longueur et 30 cm de diamètre, pour un poids de 45 kg et une puissance fournie de 70 kilowatts sur l'axe du générateur, dans le cas d'un avion commercial biréacteur court-moyen courrier de 150 places environ. On comprend que la puissance de la micro-turbine 6 dépend naturellement de la puissance nécessaire pour mouvoir l'avion au sol.

La micro-turbine 6 comporte une roue libre et un démultiplicateur de vitesse 9, permettant ainsi l'entraînement débrayable d'un générateur électrique 8. Ce générateur électrique 8, de type connu de l'homme du métier, produit par exemple du courant de type 115 V 400 Hz. De cette manière, le couple formé par la micro-turbine 6 et le générateur électrique 8 est capable de remplacer un APU de l'avion ou un générateur principal de courant si nécessaire.

L'ensemble formé par la micro-turbine 6 et le générateur électrique 8 est reliée à la chaine de transmission de la boite à accessoires 2, de façon débrayable, par l'intermédiaire d'un embrayage mécanique commandé 7, par exemple de type à crabots, connu en soi.

De cette manière, et du fait de son dimensionnement en termes de puissance générée, la micro-turbine 6 est susceptible de servir de moyen de lancement du turboréacteur 1 pour le démarrage de celui-ci.

Par contre, en commandant le débrayage de l'embrayage mécanique 7, elle n'est pas entraînée par la chaine de transmission de la boite à accessoires 2, lors du fonctionnement normal du turboréacteur 1, par exemple lors du vol proprement dit. De même, il est possible d'entraîner le générateur électrique 8 par le turboréacteur 1 à travers la boîte à accessoires 2, en maintenant l'embrayage mécanique 7 embrayé, en l'absence de fonctionnement de la micro-turbine 6, isolée par la roue libre.

Dans un mode de réalisation décrit ici à titre d'exemple, la micro-turbine 6 est alimentée en carburant grâce à une connexion sur le circuit d'alimentation du turboréacteur 1, en aval de la vanne d'isolation carburant ("shut-off valve" en anglais). De même, la micro-turbine 6 est alimentée en air par l'intermédiaire d'une veine d'air (non représentée sur les figures), reliée à la ventilation classiquement présente sur la zone dite corps de la nacelle du turboréacteur 1. Il est clair que ce prélèvement d'air reste non significatif au regard du dimensionnement de la ventilation de la nacelle du turboréacteur 1.

La micro-turbine 6 est dotée d'une zone de sortie de gaz chauds (également non représentée sur les figures), au niveau de la surface extérieure de la nacelle du turboréacteur 1. Cette zone de sortie est par exemple réalisée sous forme d'une zone métallique adaptée à supporter les températures de sortie des gaz de combustion de la micro-turbine 6. Un tel type de zone de sortie de gaz chaud est connu de l'homme du métier, et existe par exemple pour les sorties d'air chaud des dispositifs destinés à empêcher la formation de glace sur les bords d'attaque des ailes ou nacelles.

Dans le mode de réalisation décrit, la micro-turbine 6 est dotée d'un silencieux, de manière à réduire le bruit généré, lors de son fonctionnement au sol.

Un ou des câbles électriques de type connu relient le générateur électrique 8 à un système de contrôle (dit électronique de puissance) qui est lui-même relié aux moteurs électriques, installé au niveau de la jante des roues d'au moins un train de roues du train d'atterrissage principal. Chaque moteur électrique est préférentiellement de type courant continu à aimant permanant sans que cela ne soit limitatif.

Dans le cas où l'aéronef utilise un réseau électrique à fréquence variable, il est envisageable de contrôler directement un moteur de type inductif par la fréquence de sortie du générateur électrique 8 (de type « fréquence variable ») donc par contrôle de la vitesse de rotation de la micro-turbine 6. Cette solution permet de relier directement le générateur électrique 8 aux moteurs et de se passer d'un système de contrôle additionnel (économie de volume et de masse). Cependant cette solution est plus complexe à mettre en oeuvre du point de vue technique.

En cas de présence d'une électronique de puissance, les modules de contrôle peuvent soit être communalisés dans le système électrique de l'avion (cas d'un avion dit « plus électrique »), ou bien spécifiques au système de roulage. Dans le premier cas, le générateur électrique 8 n'a qu'un système de distribution électrique, et la commutation pour alimenter le système de roulage se fait au niveau du coeur électrique de l'avion. Dans le second cas, un réseau électrique spécifique est issu du générateur électrique 8 en parallèle du réseau électrique de l'avion (utilisé pour alimenter l'avion lorsque les moteurs sont allumés). La commutation entre les deux réseaux est assurée au niveau du générateur.

Lorsque l'électronique de puissance est spécifique, elle doit être située au plus prés des moteurs pour limiter la longueur des câbles d'alimentation. Les technologies couramment utilisées sur avion imposent de positionner ces composants en zone pressurisée. La situation idéale est alors à proximité de la case de train :
- Arrière de la soute avant
- Avant de la soute arrière
- Entre la case de train et le plancher cabine

Les futures technologies permettront probablement de localiser ces équipements en zone non pressurisée. Des perspectives prometteuses sont alors envisageables comme par exemple :
- Directement dans la nacelle, à proximité du générateur
- Dans le mât (par exemple comme les extincteurs dans un mât A320 actuel)
- Dans le carénage de mât
- Dans la case de train
- Dans le carénage ventral de voilure.

Un tel moteur électrique est connu en soi, et par exemple décrit dans la demande de brevet US 2006 / 0065779 A1 ou dans le document WO 2007 / 048164 A1. Sa disposition précise et son type sortent du cadre de la présente invention, et ne sont donc pas détaillés plus avant ici.

La régulation de la micro-turbine 6 est faite en fonction de la puissance demandée par les moteurs électriques des roues. Une telle régulation de la puissance sur l'arbre d'une turbine est bien connue de l'homme de l'art et n'est donc pas détaillée plus avant ici.

### Mode de fonctionnement

Dans son mode de fonctionnement normal, la micro-turbine 6 est utilisée lors des phases de roulage de l'avion, soit en taxi-in (de la piste d'atterrissage vers la porte de débarquement), soit en taxi-out (de la porte d'embarquement à la piste de décollage).

Lors de ces phases, et sur ordre du pilote, les turboréacteurs 1 sont arrêtés, et les micro-turbines 6 mises en marche. Les générateurs électriques 8 associés produisent du courant qui est acheminé vers les moteurs électriques disposés dans les jantes de certaines roues du train d'atterrissage principal. Il est alors possible de piloter la puissance produite par les générateurs électriques, et de réaliser notamment des arrêts et redémarrages des micro-turbines 6 selon les besoins.

Un système centralisé a deux avantages par rapport à un système localisé :
- Indépendance des roues entraînées vis-à-vis de l'origine (droite ou gauche) de la puissance. Il est donc envisageable d'alimenter tous les moteurs avec une seule turbine en fonctionnement (lorsque le besoin de puissance est modéré, comme au repoussage par exemple). Les bénéfices en consommation carburant en sont donc augmentés.
- Communalisation avec le système d'énergie de l'avion. Cette solution permet de mettre en commun certains composants de masse élevée, et d'envisager l'utilisation du système pour l'alimentation d'autres systèmes. Cette solution est en particulier intéressante lorsque les micro-turbines sont utilisées en remplacement de l'APU.

### Avantages

Le dispositif tel que décrit fournit à l'avion une autonomie de roulage au sol, ce qui peut par exemple éviter audit avion de devoir attendre la disponibilité d'un véhicule tracteur. Vu la congestion de certains aéroports, le gain de temps est susceptible d'éviter la perte d'un créneau de décollage, d'où un avantage en termes d'utilisation opérationnelle de l'avion.

Il est clair que la disposition de la micro-turbine au voisinage immédiat du train de roues, sur lequel est installé un moteur électrique d'entrainement, constitue un avantage important dans la mesure où cette disposition évite l'installation de lignées électriques à haute puissance entre l'APU et les roues, ce qui est le cas des dispositifs qui utiliseraient une fourniture de courant électrique aux moteurs des roues par l'APU.

On note que la micro-turbine 6 bénéficie, du fait de son installation au sein de la nacelle du turboréacteur, des systèmes de protection contre le feu (dispositif d'extinction moteur) ou les fuites de carburant ou d'huile, déjà installés pour protéger le turboréacteur 1. De ce fait, le dispositif présente une bonne sécurité de fonctionnement.

On note également que du fait du délai de démarrage très court des micro-turbines, il est possible d'arrêter ou de redémarrer à volonté celle-ci, lors du roulage de l'avion, ce qui permet de réduire significativement la consommation de carburant.

### Variantes

La portée de la présente invention ne se limite pas aux détails des formes de réalisation ci-dessus considérées à titre d'exemple, mais s'étend au contraire aux modifications à la portée de l'homme de l'art.

Il est par exemple possible de considérer en variante l'installation d'une micro-turbine de 140 kW de puissance fournie sur un seul turboréacteur de l'avion, au lieu de deux micro-turbines de 70 kW installées chacune sur un turboréacteur de l'avion, tel que décrit plus haut.

Dans la description, on a considéré l'installation d'un générateur électrique entraîné par la micro-turbine. Il est également possible de disposer plutôt un générateur hydraulique de type connu, également chargé de récupérer une partie de la puissance mécanique fournie par la micro-turbine 2, et une ligne de pression hydraulique jusqu'à un train de roues de l'avion.

L'utilisation des micro-turbines est alors envisageable lors de déplacement d'un avion au sol pour maintenance, dans un cas où les turboréacteurs sont éteints, où l'APU n'est pas utilisable et où les systèmes hydrauliques sont donc inopérants. Dans ce cas, le dispositif tel que décrit peut permettre d'assurer le roulage, la direction et le freinage, en alimentant les systèmes hydrauliques de base à l'exclusion notamment des commandes de vol.

## Revendications

1. Dispositif d'entraînement d'au moins une roue de train d'atterrissage d'un aéronef par un moteur de roue, ledit dispositif étant destiné à être utilisé lors de la phase de roulage au sol de l'aéronef, ledit aéronef étant du type comportant des turboréacteurs (1) attachés à la voilure principale ainsi que des nacelles comportant lesdits turboréacteurs, le dispositif comportant au moins une source de puissance, et une ligne de transmission de puissance entre la source de puissance et le moteur de roue, la source de puissance (6, 8) comportant une micro-turbine (6) entraînant un générateur (8), la micro-turbine étant configurée pour être installé dans la nacelle d'un turboréacteur (1), **caractérisé en ce que** la source de puissance comporte en outre des moyens débrayables (7) capable d'être reliée mécaniquement à une partie tournante du turboréacteur (1), la source de puissance étant suffisante pour servir de démarreur du turboréacteur (1).

2. Dispositif selon la revendication 1, **caractérisé en ce que** la micro-turbine (6) entraîne le générateur (8) par l'intermédiaire d'une roue libre et d'un démultiplicateur de vitesse (9).

3. Dispositif selon la revendication 2, chaque turboréacteur (1) étant doté d'une boîte à accessoires (2), ladite boîte comportant une transmission mécanique reliée à la partie tournante du turboréacteur (1), **caractérisé en ce que** l'ensemble formé par la micro-turbine (6) et le générateur électrique (8) est reliée à la transmission de la boite à accessoires (2), de façon débrayable, par l'intermédiaire d'un embrayage mécanique commandé (7), de type à crabots.

4. Dispositif selon l'une quelconque des revendications 1 à 3, **caractérisé en ce que** le générateur (8) est un générateur électrique, la ligne de transmission de puissance est une ligne de transport d'électricité, et le moteur de roue est un moteur électrique.

5. Dispositif selon l'une quelconque des revendications 1 à 3, **caractérisé en ce que** le générateur (8) est un générateur pneumatique, la ligne de transmission de puissance est une ligne de transmission de pression pneumatique, et le moteur de roue est un moteur pneumatique.

6. Dispositif selon l'une quelconque des revendications 1 à 3, **caractérisé en ce que** le générateur (8) est un générateur hydraulique, la ligne de transmission de puissance est une ligne de transmission par fluide sous pression, et le moteur de roue est un moteur hydraulique.

7. Ensemble formé d'un dispositif selon l'une quelconque des revendications précédentes, et d'une nacelle d'aéronef comportant un turboréacteur (1), **caractérisé en ce que** :
- la micro-turbine (6) est installée dans la nacelle du turboréacteur (1),
- la micro-turbine (6) est alimentée en carburant grâce à une connexion sur le circuit d'alimentation du turboréacteur (1), en aval d'une "shut-off valve" de ce turboréacteur (1),
- la micro-turbine (6) est alimentée en air par l'intermédiaire d'une veine d'air reliée à la ventilation de la zone dite corps de la nacelle du turboréacteur (1),
- la micro-turbine (6) est dotée d'une zone de sortie de gaz chauds, au niveau de la surface extérieure de la nacelle du turboréacteur (1).

8. Procédé de pilotage d'un aéronef au sol, lors d'une phase de roulage entre une piste d'atterrissage et un point de stationnement, ledit aéronef comportant au moins un ensemble selon la revendication 7, **caractérisé en ce qu'**il comporte des phases suivantes :
- extinction des turboréacteurs (1) principaux,
- mise en marche d'au moins une micro-turbine (6),
- mise en marche du ou des moteurs de roue alimentés par la micro-turbine (6),
- régulation de la micro-turbine (6) en fonction de la puissance demandée par le ou les moteurs de roue ,
- arrêt et redémarrage de la micro-turbine (6) selon les besoins d'arrêt et redémarrage de l'aéronef durant son roulage.

## Patentansprüche

1. Vorrichtung zum Antrieb mindestens eines Fahrwerksrads eines Luftfahrzeugs durch einen Radmotor, wobei die Vorrichtung dazu bestimmt ist, während der Phase des Rollens des Luftfahrzeugs am Boden verwendet zu werden, wobei das Luftfahrzeug von der Art ist, die Turbostrahltriebwerke (1) am Haupttragwerk befestigt sowie die Turbostrahltriebwerke aufweisende Gondeln aufweist, wobei die Vorrichtung mindestens eine Leistungsquelle und eine Leistungsübertragungsleitung zwischen der Leistungsquelle und dem Radmotor aufweist, wobei die Leistungsquelle (6, 8) eine einen Generator (8) antreibende Mikroturbine (6) aufweist, wobei die Mikroturbine konfiguriert ist, um in der Gondel eines Turbostrahltriebwerks (1) installiert zu werden, **dadurch gekennzeichnet, dass** die Leistungsquelle außerdem auskuppelbare Einrichtungen (7) aufweist, die mechanisch mit einem drehenden Teil des Turbostrahltriebwerks (1) verbunden werden können, wobei die Leistungsquelle ausreicht, um als Starterdes Turbostrahltriebwerks (1) zu dienen.

2. Vorrichtung nach Anspruch 1, **dadurch gekennzeichnet, dass** die Mikroturbine (6) den Generator (8) über ein Freilaufrad und ein Untersetzungsgetriebe (9) antreibt.

3. Vorrichtung nach Anspruch 2, wobei jedes Turbostrahltriebwerk (1) mit einem Zusatzgerätekasten (2) ausgestattet ist, wobei der Kasten ein mechanisches Getriebe aufweist, das mit dem drehenden Teil des Turbostrahltriebwerks (1) verbunden ist, **dadurch gekennzeichnet, dass** die von der Mikroturbine (6) und dem elektrischen Generator (8) geformte Einheit mit dem Getriebe des Zusatzgerätekastens (2) über eine gesteuerte mechanische Kupplung (7) von der Art Klauenkupplung auskuppelbar verbunden ist.

4. Vorrichtung nach einem der Ansprüche 1 bis 3, **dadurch gekennzeichnet, dass** der Generator (8) ein elektrischer Generator, die Leistungsübertragungsleitung eine Elektrizitätstransportleitung und der Radmotor ein Elektromotor ist.

5. Vorrichtung nach einem der Ansprüche 1 bis 3, **dadurch gekennzeichnet, dass** der Generator (8) ein Druckluftge nerator, die Leistungsübertragungsleitung eine Druckluftübertragungsleitung und der Radmotor ein Druckluftmotor ist.

6. Vorrichtung nach einem der Ansprüche 1 bis 3, **dadurch gekennzeichnet, dass** der Generator (8) ein Hydraulikge nerator, die Leistungsübertragungsleitung eine Übertragungsleitung mittels Druckfluid und der Radmotor ein Hydraulikmotor ist.

7. Einheit, die aus einer Vorrichtung nach einem der vorhergehenden Ansprüche und einer Luftfahrzeuggondel geformt wird, die ein Turbostrahltriebwerk (1) aufweist, **dadurch gekennzeichnet, dass**:
- die Mikroturbine (6) in der Gondel des Turbostrahltriebwerks (1) installiert ist,
- die Mikroturbine (6) mittels einer Verbindung mit dem Versorgungskreislauf des Turbostrahltriebwerks (1) hinter einem "shut-off valve" dieses Turbostrahltriebwerks (1) mit Kraftstoff versorgt wird,
- die Mikroturbine (6) mittels einer Luftströmung mit Luft versorgt wird, die mit der Belüftung der Körper der Gondel des Turbostrahltriebwerks (1) genannten Zone verbunden ist,
- die Mikroturbine (6) mit einer Austrittszone heißer Gase im Bereich der Außenfläche der Gondel des Turbostrahltriebwerks (1) versehen ist.

8. Verfahren zum Steuern eines Luftfahrzeugs am Boden bei einer Phase des Rollens zwischen einer Landepiste und einem Parkpunkt, wobei das Luftfahrzeug mindestens eine Einheit nach Anspruch 7 aufweist, **dadurch gekennzeichnet, dass** es die folgenden Phasen aufweist:
- Abschalten der Hauptturbostrahltriebwerke (1),
- Start mindestens einer Mikroturbine (6),
- Start des oder der Radmotoren, die von der Mikroturbine (6) versorgt werden,
- Regelung der Mikroturbine (6) abhängig von der von dem oder den Radmotoren geforderten Leistung,
- Anhalten und Neustart der Mikroturbine (6) entsprechend den Bedürfnissen des Anhaltens und Neustarts des Luftfahrzeugs während seines Rollens.

## Claims

1. Device for driving at least one landing gear wheel of an aircraft by means of a wheel motor, said device being intended to be used in the taxiing phase of an aircraft, said aircraft being of the type comprising jet engines (1) attached to the main wing unit and nacelles containing said jet engines, the device comprising at least one power source, and a power transmission line between the power source and the wheel motor, the power source (6, 8) comprising a microturbine (6) driving a generator (8), the microturbine being configured to be installed in the nacelle of a jet engine (1), **characterized in that** the power source further comprises disengageable means (7) capable of being mechanically linked to a rotating part of the jet engine (1), the power source being sufficient to serve as starter for the jet engine (1) .

2. Device according to Claim 1, **characterized in that** the microturbine (6) drives the generator (8) via a free wheel and a speed reducing gear (9).

3. Device according to Claim 2, each jet engine (1) being provided with a gearbox (2), said gearbox comprising a mechanical transmission linked to the rotating part of the jet engine (1), **characterized in that** the assembly formed by the microturbine (6) and the electrical generator (8) is linked to the transmission of the gearbox (2), disengageably, via a controlled mechanical clutch (7) of claw type.

4. Device according to any one of Claims 1 to 3, **characterized in that** the generator (8) is an electrical generator, the power transmission line is an electricity transport line, and the wheel motor is an electric motor.

5. Device according to any one of Claims 1 to 3, **characterized in that** the generator (8) is a pneumatic generator, the power transmission line is a pneumatic pressure transmission line, and the wheel motor is a pneumatic motor.

6. Device according to any one of Claims 1 to 3, **characterized in that** the generator (8) is a hydraulic generator, the power transmission line is a pressurized fluid transmission line, and the wheel motor is a hydraulic motor.

7. Assembly formed from a device according to any one of the preceding claims, and an aircraft nacelle containing a jet engine (1), **characterized in that**:
- the microturbine (6) is installed in the nacelle of the jet engine (1),
- the microturbine (6) is supplied with fuel by virtue of a connection to the supply circuit of the jet engine (1), downstream of a shut-off valve of this jet engine (1),
- the microturbine (6) is supplied with air via an airline linked to the air-cooling system of the area called body of the nacelle of the jet engine (1),
- the microturbine (6) is provided with a hot gas output area, on the outer surface of the nacelle of the jet engine (1).

8. Method for piloting an aircraft on the ground, in a taxiing phase between a landing runway and a parking point, said aircraft comprising at least one assembly according to Claim 7, **characterized in that** it comprises the following phases:
- switching off of the main jet engines (1),
- starting up of at least one microturbine (6),
- starting up of the wheel motor(s) powered by the microturbine (6),
- regulation of the microturbine (6) as a function of the power demanded by the wheel motor(s),
- stopping and restarting of the microturbine (6) depending on the requirements to stop and restart the aircraft while it is taxiing.
